Europäisches Patentamt

European Patent Office

Office européen des brevets

(19)

(11) **EP 0 752 788 A2**

## (12) EUROPÄISCHE PATENTANMELDUNG

(43) Veröffentlichungstag:
**08.01.1997 Patentblatt 1997/02**

(51) Int. Cl.⁶: $H04N\ 7/30$, $H04N\ 7/50$

(21) Anmeldenummer: **96109773.0**

(22) Anmeldetag: **18.06.1996**

(84) Benannte Vertragsstaaten:
**DE FR GB**

(30) Priorität: **07.07.1995 DE 19524872**

(71) Anmelder: **SIEMENS AKTIENGESELLSCHAFT**
**80333 München (DE)**

(72) Erfinder: **Geib, Heribert, Dr.**
**85567 Grafing (DE)**

(54) **Videocoder und -decoder**

(57)     Es wird in einer Codier/Decodiereinheit (CD) eine Run Length-Codierung (RLC) in einem Vorwärtspfad (VP) und für eine interne Rekonstruktion des Videodatenstroms in einem Rekonstruktionspfad zu Beginn der Rekonstruktion eine Run Length-Decodierung (RLD) durchgeführt, wodurch auf den ersten Blick ein Zusatzaufwand im Vergleich zu bekannten Verfahren entsteht.

Dadurch wird jedoch eine Verzahnung von Aufgaben ermöglicht, die in bisherigen Verfahren nacheinander durchgeführt wurden. Durch die Verzahnung von Scanverfahren (SV), Quantisierung (Q) und Run Length Codierung (RLC), Run Length Decodierung (RLD), inverse Quantisierung (IQ) und dem inversen Scanverfahren (ISV) wird eine erhebliche Reduktion des Gesamtaufwandes gegenüber bekannten Vorgehensweisen erreicht.

FIG 1

EP 0 752 788 A2

**Beschreibung**

Im Rahmen der heutzutage immer mehr an Bedeutung gewinnenden Telekommunikation, vor allem im Bereich Multimedia, gewinnt auch die Codierung und Kompression von zu übertragenden Daten immer größere Bedeutung. Die Codierung der Daten sollte so durchgeführt werden, daß eine möglichst große Komprimierung der Information unter möglichst geringem Informationsverlust erreicht wird.

Es sind verschiedene Verfahren zur Codierung von einem Videodatenstrom bekannt (International Standard ISO/IEC 11172-2, Coding of Moving pictures and associated audio, ISO/MPEG, 1993), oder (Draft International Standard ISO/IEC 13818-2, Generic coding of moving pictures and associated audio, 25.03.1994) oder (ITU-T Rec. H.261) oder (ITU-T Rec. H.263).

Diese Verfahren verwenden Prinzipien der Prädiktionscodierung und der Transformationscodierung. Bei der Prädiktion werden Differenzbilder durch Subtraktion prädizierter Bilddaten von den zu codierenden ursprünglichen Bilddaten erzeugt.

Zur Prädiktion wird eine sogenannte bewegungskompensierte Prädiktion verwendet. Die Grundlagen der hierzu erforderlichen Bewegungsschätzung und ihre Anwendung zur bewegungskompensierten Prädiktion sind dem Fachmann bekannt (Draft International Standard ISO/IEC 13818-2, Generic coding of moving pictures and associated audio, 25.03.1994) oder (M. Bierling, Displacement estimation by hierarchical block matching, 3rd SPIE Symp. on Visual Communication, Cambridge, MA, November 1988, 1988).

Zusätzlich zur bewegungskompensierten Prädiktion ist bei den genannten standardisierten Verfahren zur Codierung eines Videodatenstroms eine sogenannte bewegungskompensierte Interpolation vorgesehen. Die bewegungskompensierte Interpolation wird im Zusammenhang mit der MPEG-Terminologie auch als bidirektionale Prädiktion bezeichnet. Im Rahmen dieser Anmeldung wird jedoch der Begriff bewegungskompensierte Interpolation verwendet.

Die in den Differenzbildern vorhandenen örtlichen Korrelationen zwischen benachbarten Bildpunkten werden mit Hilfe einer geeigneten Transformation, zum Beispiel mit Hilfe des diskreten Kosinustransformation (DCT), ausgenutzt. Die verwendete Codierungstransformation liefert Codierungstransformationskoeffizienten, die einer Quantisierung und einer Entropiecodierung unterzogen werden, und danach übertragen werden zu einem Empfänger, bei dem das gesamte Codierungsverfahren in inverser Weise durchgeführt wird, so daß beim Empfänger nach Durchführung der Decodierung wieder direkt Information über die Bildpunkte zur Verfügung steht.

Der Erfindung liegt das Problem zugrunde, ein Verfahren und eine Anordnung zur Durchführung des Verfahrens anzugeben, das den Aufwand zur Codierung und Decodierung eines Videodatenstroms reduziert.

Dieses Problem wird mit dem Verfahren mit Merkmalen des Anspruches 1 und der Anordnung zur Durchführung des Verfahrens nach Anspruch 10 gelöst.

Durch das erfindungsgemäße Verfahren wird eine Verzahnung der bei bekannten Verfahren aufeinanderfolgenden Aufgaben bei der Rekonstruktion des Videodatenstroms möglich, wobei der Aufwand für die Verarbeitung gegenüber den hintereinander ausgeführten ursprünglichen Einzelaufgaben deutlich verringert wird. Durch die Weiterbildung des erfindungsgemäßen Verfahrens gemäß Anspruch 8 wird es möglich, Steuerparameter mit einem programmierbaren Prozessor, mit dem Vorteil der freien Algorithmenwahl, zu berechnen und an den Coder zu übergeben, der mit diesen Parametern die Bildelemente des Videodatenstroms verarbeitet.

Die Weiterbildung des Verfahrens nach Anspruch 7 stellt eine zusätzliche Einsparung von Schritten dar, die sonst unnützerweise bei bekannten Verfahren durchgeführt werden.

Die Erfindung ist in keiner Weise auf den Bereich der Codierungstransformation, erst recht nicht auf den Bereich der blockweisen DCT-Codierung, beschränkt. Die Erfindung ist im Zusammenhang mit praktisch allen bekannten oder zukünftig zu entwickelnden Methoden der Intrabildcodierung, zum Beispiel auch im Zusammenhang mit der sogenannten Quadtreecodierung oder im Zusammenhang mit Methoden auf der Grundlage von Objektsegmenten, anwendbar.

Im folgenden wird die Erfindung anhand bevorzugter Ausführungsbeispiele und mit Hilfe der Figuren näher beschrieben.

Es zeigen

Figur 1    ein Blockschaltbild, das das erfindungsgemäße Verfahren gemäß Anspruch 1 und die Anordnung gemäß Anspruch 10 darstellt;

Figur 2    ein Flußdiagramm, das die Verzahnung des Scanverfahrens, des Quantisierens und der Run Length Codierung beschreibt;

Figur 3    ein Blockschaltbild des Vorwärtspfades der Codier/Decodiereinheit;

Figur 4    ein Blockschaltbild, das die Verzahnung der inversen Quantisierung, der Run Length Decodierung und des inversen Scanverfahrens bei der Decodierung des Videodatenstroms darstellt;

Figur 5    ein erweitertes Blockschaltbild für die Decodierung und Rekonstruktion für Videodatenströme, die nach dem MPEG-Standard oder dem JPEG-Standard codiert wurden;

Figur 6    ein Blockschaltbild, in dem die Kombination der Run Length Decodierung mit einer Auswahl möglicher Scanverfahren dargestellt ist;

Figur 7 ein Blockschaltbild, in dem eine Anordnung zur Durchführung der Codierung und Decodierung des Videodatenstroms beschrieben ist;

Figur 8 eine Skizze, die eine Anordnung zur kombinierten Durchführung der inversen Quantisierung, der Run Length Decodierung und des inversen Scanverfahrens beschreibt;

Figur 9 eine Skizze, in der eine mögliche prinzipielle Realisierung der Berechnung der Steuerparameter mit einem programmierbaren Prozessor und die Übergabe der Steuerparameter an die Anordnung nach Figur 7.

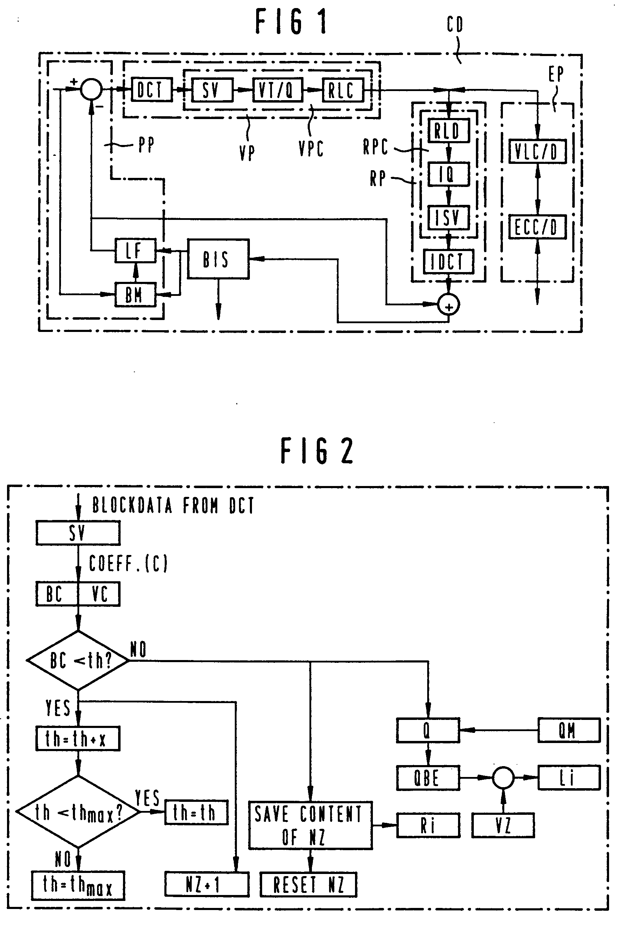

Anhand der Figuren 1 bis 8 wird die Erfindung weiter erläutert.

In Figur 1 ist in Form eines Blockdiagramms ein bevorzugtes Ausführungsbeispiel des erfindungsgemäßen Verfahrens gemäß Anspruch 1 beschrieben.

In einem Vorwärtspfad VP einer Codier/Decodiereinheit CD werden folgende Schritte auf einen zu codierenden Videodatenstrom, das heißt auf alle Bildelemente des Videodatenstroms bzw. auf die Differenzbilder, die wie im weiteren beschrieben, entstehen, angewendet.

Zuerst wird auf den Videodatenstrom eine Codierungstransformation DCT angewendet. Vorzugsweise wird hierfür die Diskrete Cosinus-Transformation DCT angewendet. Das erfindungsgemäße Verfahren beschränkt sich jedoch nicht auf diese spezielle Codierungstransformation sondern kann für jede beliebige Codierungstransformation angewendet werden. Durch die Codierungstransformation DCT werden örtliche Korrelationen der Bildpunkte eines Bildes des Videodatenstroms ausgenutzt zur Komprimierung des Videodatenstroms.

Auf die von der Codierungstransformation DCT gelieferten Codierungstransformationskoeffizienten wird ein Scanverfahren SV angewendet. Als Scanverfahren SV sind unterschiedliche Scanverfahren anwendbar, zum Beispiel das bekannte Zig-Zag-Scanverfahren oder auch das bekannte Alternate-Scanverfahren. Bei entsprechender Berücksichtigung des verwendeten Scanverfahrens SV bei der im späteren beschriebenen Adreßberechnung bei der Rekonstruktion des Videodatenstroms ist die Wahl des verwendeten Scanverfahrens SV nicht von Bedeutung. Es kann also jedes beliebige Scanverfahren SV verwendet werden, wenn die Eigenschaften des Scanverfahrens SV im weiteren zum Beispiel bei der im weiteren beschriebenen Adreßberechnung berücksichtigt wird.

Bei Verwendung eines blockbasierten Verfahrens zur Codierung des Videodatenstroms wird also ein Bildblock oder ein Differenzbildblock codierungstransformiert und im Anschluß daran mittels des Scanverfahrens SV in serielle Daten umgewandelt.

Die gescanten Codierungstransformationskoeffizienten werden nun einer Quantisierung Q in einer Quantisierungseinheit Q unterzogen. Es ist auch möglich, die Quantisierung Q mit einem sogenannten Variable Thresholding VT zu kombinieren. Die Anwendung des Variable Thresholding VT ist bei der Codierung nach MPEG-Standard nicht üblich. Verfahren zur Quanitisierung Q der gescanten Codierungstransformationskoeffizienten sind bekannt und können beliebig gewählt werden. Wichtig ist nur, daß eine im weiteren beschriebene inverse Quantisierung IQ zu dem jeweils verwendeten Quantisierungsverfahren Q invers ist.

Als letzter Schritt in dem Vorwärtspfad VP, wird eine Run Length Codierung RLC auf die quantisierten Codierungstransformationskoeffizienten angewendet. Werden als allgemeines Codierungsverfahren zum Beispiel ein MPEG-Verfahren oder ein Verfahren nach dem Standard H.261 oder nach dem Standard H.263 verwendet, liefert die Run Length Codierung RLC sogenannte Level-Werte $L_i$, wobei i den Index des jeweiligen Level Werts angibt, der im Bereich von 1 bis n liegt. Bei dem MPEG-Verfahren oder dem H.261-Standard beträgt die Anzahl n der Level-Werte maximal 63, wenn eine den Gleichanteil des Bildblockes repräsentierende Komponente mit $L_{DC}$ bezeichnet wird. Nach dem letzten von Null verschiedenen Level Wert wird eine End-of-Block-Marke EOB gesendet, wenn dieser Level nicht $L_{63}$ war. Die den Gleichanteil des Bildblockes repräsentierende Komponente $L_{DC}$ könnte in diesem Zusammenhang auch als $L_0$ bezeichnet werden.

Zweck der Codierung ist es, möglichst wenig Level-Werte zu erzeugen. Es werden bei der Run Length Codierung RLC neben der den Gleichanteil repräsentierenden Komponente $L_{DC}$ Paare von Level-Werten und den jeweiligen Level-Werten zugeordneten Run-Werte $R_i$ gebildet, wobei i den Index des jeweiligen Run-Wertes angibt, der zwischen 1 und n-1 liegen kann. Der Run Wert $R_i$ gibt die Anzahl von Nullen vor einem folgenden Level Wert $L_i$ an.

In einem Rekonstruktionspfad RP, in dem eine interne Rekonstruktion des codierten Videodatenstroms durchgeführt wird, werden folgende Verfahrensschritte vorgesehen.

Auf die Run Length codierten Daten, die in dem Vorwartspfad VP codiert wurden, wird in einem ersten Rekonstruktionsschritt eine Run Length Decodierung RLD angewendet, die zu der verwendeten Run Lenght Codierung RLC in dem Vorwärtspfad VP bei der Codierung invers ist.

Die Einfügung der Run Length Decodierung bei der internen Rekonstruktion des codierten Datenstroms in der Codier/Decodiereinheit CD ist gegenüber der bisher üblichen Vorgehensweise neu. Bisher wurde keine Run Length Decodierung RLD in der Codier/Decodiereinheit CD zur internen Rekonstruktion des codierten Datenstroms vorgesehen, sondern nur bei der Rekonstrukuktion empfangener Datenströme, da diese von einer anderen Sendeeinheit Run Length codiert waren. Dies hatte unter anderem den Nachteil, daß zwei Pfade unterschiedlichen Aufbaus benötigt wurden.

Ein benötigter Pfad wies den gleichen Aufbau wie der Rekonstruktionspfad RP auf, also mit integrierter Run Length Decodierung zur Decodierung von einer Sendeeinheit empfangenen Datenströme.

Ein zweiter Pfad wurde aber benötigt zur internen Rekonstruktion des codierten Datenstroms, der in der Codier/Decodiereinheit CD codiert wird. Durch das erfindungsgemäße Verfahren und die erfindungsgemäße Anordnung kann der Rekonstruktionspfad RP sowohl zur internen Rekonstruktion des codierten Datenstroms verwendet werden als auch zur Decodierung von von einer Sendeeinheit empfangenen Datenströmen. Dies bedeutet eine erhebliche Einsparung an benötigten Komponenten in der Codier/Decodiereinheit CD, was vor allem in der Massenproduktion einer Codier/Decodiereinheit CD erhebliche Vorteile mit sich bringt.

Dieser zusätzliche Verfahrensschritt schon in der Codier/Decodiereinheit CD bedeutet auf den ersten Blick einen zusätzlichen Aufwand. Wie im weiteren jedoch erläutert wird, bedeutet die Verwendung der Run Length Codierung RLC und der Run Length Decodierung RLD in der Codier/Decodiereinheit CD die Möglichkeit, den Gesamtaufwand der Codierung und Decodierung des Videodatenstroms erheblich zu reduzieren.

Für die im weiteren beschriebene Anordnung des Rekonstruktionspfades RP bedeutet diese Verwendung der Run Length Decodierung RLD auch bei der internen Rekonstruktion des codierten Datenstroms, daß sowohl für die Codier/Decodiereinheit CD als auch für eine Decodiereinheit, die in einer Empfängereinheit verwendet wird, daß derselbe Baustein verwendet werden kann, was bei einer Massenproduktion einer den Rekonstruktionspfad RP realisierenden Anordnung erhebliche Vorteile aufweist.

Bisher unterschieden sich die Bausteine des Rekonstruktionspfades RP in der Codier/Decodiereinheit CD von den in der Empfängereinheit zur Realisierung des Rekonstruktionspfad RP benötigten Bausteinen, da in der internen Rekonstruktion des codierten Datenstroms die Run Length Decodierung RLD nicht vorgesehen war. Sie wurde in der Empfängereinheit aber trotzdem benötigt, da die Run Length Codierung RLC in der Codier/Decodiereinheit CD trotzdem vorgesehen wurde, allerdings nicht in dem Vorwärtspfad VP, sondern in einem im weiteren erläuterten Entropiepfad EP.

Die von der Run Length Decodierung RLD erhaltenen Daten werden nun der inversen Quantisierung IQ unterzogen. Die inverse Quantisierung IQ muß zu dem verwendeten Quantisierungsverfahren Q in dem Vorwärtspfad VP invers sein.

Die inverse Quantisierung IQ wird bei Verwendung der bekannten Verfahren, zum Beispiel MPEG1, MPEG2, H.261, H.261 oder JPEG, ausschließlich auf die Level-Werte $L_i$ und auf den Level-Wert $L_{DC}$ angewendet, so daß nach der inversen Quantisierung IQ die im vorigen beschriebenen Paare von Level-Werten $L_i$

und zugehörigen Run-Werten $R_i$ in Paare von Run-Werten $R_i$ und zugehörigen dequantisierten Codierungstransformationskoeffizienten $C_i$, wobei wiederum i den Index des jeweiligen dequantisierten Codierungstransformationskoeffizienten C angibt und wobei der Index i zwischen 1 und n liegen kann.

Ein dequantisierter Codierungstransformationskoeffizient $C_{DC}$ entspricht in diesem Zusammenhang der den Gleichanteil repräsentierenden Komponente des Level Werts $L_{DC}$.

Verglichen mit bisherigen Verfahren werden in diesem Fall alle Multiplikationen mit Null-Koeffizienten komplett eingespart. Diese unnötigen Multiplikationen wurden in bisherigen Verfahren, zum Beispiel einem MPEG Standard durchgeführt.

Auf die dequantisierten Codierungstransformationskoeffizienten wird nun ein inverses Scanverfahren ISV durchgeführt, das zu dem im Vorwärtspfad VP der Codier/Decodiereinheit CD verwendeten Scanverfahren SV invers ist.

Die aus dem inversen Scanverfahren ISV erhaltenen Daten werden nun einer inversen Codierungstransformation IDCT unterzogen, die zu der in dem Vorwärtspfad VP der Codier/Decodiereinheit CD verwendeten Codierungstransformation DCT invers ist.

Entsprechend des jeweils verwendeten Verfahrens, zum Beispiel dem MPEG1-Verfahren, dem MPEG2-Verfahren, oder dem H.261-Verfahren wird in der Codier/Decodiereinheit CD eine Prädiktion in einem Prädiktionspfad PP durchgeführt, damit im weiteren nur noch Differenzbilder kodiert und übertragen werden müssen, was eine zusätzliche Datenreduktion ermöglicht. Verfahren zur Prädiktion sind in den jeweiligen Verfahren beschrieben. So werden zum Beispiel zur Prädiktion Verfahren zur Bewegungskompensation BM verwendet. In dem H.261-Standard ist zum Beispiel außerdem die Verwendung eines Loop-Filters LF vorgesehen.

Der Loop-Filter LF findet keine Verwendung in den MPEG-Verfahren.

Das erfindungsgemäße Verfahren ist nicht abhängig von den unterschiedlichen Verfahren zur Prädiktion, die in dem jeweiligen Prädiktionspfad PP verwendet werden.

In dem Entropiepfad EP werden die von der Run Length Codierung RLC erhaltenen Daten kanalcodiert und an eine Empfängereinheit übertragen. Der Aufbau des Entropiepfades EP ist wiederum abhängig von dem verwendeten Verfahren zur Codierung des Videodatenstroms, zum Beispiel also einem MPEG-Verfahren oder dem H.261-Standard. Beispielsweise kann in dem Entropiepfad EP eine Variable Length-Codierung VLC vorgesehen werden sowie eine Möglichkeit zur Erkennung von Übertragungsfehlern ECC innerhalb der Kanalcodierung.

In der Empfängereinheit werden die in dem Entropiepfad EP vorgesehenen Verfahren invers durchgeführt, so daß die rekonstruierten Daten einer Run Length Decodierung RLD zugeführt werden können.

Dies ist auch in Figur 1 dargestellt durch die Bezeichnung VLC/D und ECC/D. Diese Bezeichnungen beschreiben, daß, wenn die Codier/Decodiereinheit CD als Sendeeinheit arbeitet, also einen codierten Datenstrom erzeugt, eine Variable Length Codierung VLC und die Codierung zur Erkennung von Übertragungsfehlern ECC in dem Entropiepfad EP durchgeführt wird.

Wenn die Codier/Decodiereinheit CD als Empfängereinheit arbeitet, also einen kanalcodierten Datenstrom empfängt und diesen decodiert, so wird in dem Entropiepfad EP eine Variable Length Decodierung VLD und eine Erkennung von Übertragungsfehlern ECD durchgeführt.

Die Verwendung der Codier/Decodiereinheit CD sowohl als eine Sendeeinheit, als als eine Codiereinheit, als auch als eine Decodiereinheit ist durch einen Doppelpfeil in Figur 1 dargestellt, durch den beschrieben wird, daß von der Codier/Decodiereinheit CD sowohl Datenströme empfangen werden können als auch gesendet werden können.

In Figur 2 ist ein bevorzugtes Ausführungsbeispiel für die Verfahrensschritte innerhalb des Vorwärtspfades VP der Codier/Decodiereinheit CD beschrieben, das bei blockbasierten Verfahren angewendet werden kann. Durch Figur 2 wird die mögliche Verzahnung der Verfahrensschritte Scanverfahren SV, Variable Thresholding VT, Quantisierung Q und Run Length Codierung RLC der Codierungstransformationskoeffizienten, die von der Codierungstransformation DCT geliefert werden, verdeutlicht.

Das hier beschriebene Verfahren kann von jedem Fachmann je nach verwendetem Codierungsverfahren leicht angepaßt werden. Somit stellt das hier beschriebene Verfahren keine Einschränkung des allgemein gültigen erfindungsgemäßen Verfahrens dar.

Die von der Codierungstransformation DCT erhaltenen Codierungstransformationskoeffizienten werden, wie im vorigen beschrieben, einem Scanverfahren SV unterzogen und die gescanten Codierungstransformationskoeffizienten werden abgespeichert in Form eines Absolutbetrages BC des Codierungstransformationskoeffizienten und einem dem Absolutbetrag BC des Codierungstransformationskoeffizienten zugeordneten Vorzeichen VZ. Die Aufteilung des Codierungstransformationskoeffizienten in Betrag und Vorzeichen muß nicht explizit geschehen, sondern ist auch implizit in der Zahlendarstellung des Codierungstransformationskoeffizienten enthalten.

Die in den Figuren dargestellte und im weiteren beschriebenen Trennung in zwei Register zur separaten Speicherung des Absolutbetrages BC des Codierungstransformationskoeffizienten und des dem Absolutbetrag BC des Codierungstransformationskoeffizienten zugeordneten Vorzeichens VZ ist nicht unbedingt nötig.

Es ist ebenso möglich, daß nur der Wert des Codierungstransformationskoeffizienten gespeichert wird und der Absolutbetrag BC des Codierungstransformationskoeffizienten ermittelt wird, der in einem eigenen Register abgespeichert wird. Das Vorzeichen kann auch direkt aus dem gespeicherten Codierungstransformationskoeffizienten ermittelt werden und direkt zur weiterverwendet werden.

Somit stellt auch die in dem bevorzugten Ausführungsbeispiel beschriebene Anordnung mit zwei Registern zur Speicherung des Absolutbetrags BC des Codierungstransformationskoeffizienten und des Vorzeichens VZ des jeweiligen Codierungstransformationskoeffizienten keine Einschränkung der Allgemeingültigkeit der Anordnung und des Verfahrens insoweit dar, als Änderungen sowohl der Anordnung als auch des Verfahrens, die sich auf Varianten der Berücksichtigung des Vorzeichens VZ des Codierungstransformationskoeffizienten beziehen, z. B. also die direkte Verwendung der in der Zahlendarstellung des gespeicherten Codierungstransformationskoeffizienten Vorzeicheninformation zur Quantisierung Q, vorgesehen sind, auch wenn sie nicht explizit in den Figuren dargestellt sind.

Für jeden Absolutbetrag BC des Codierungstransformationskoeffizienten wird nun geprüft, ob der Absolutbetrag BC kleiner ist als eine vorgebbare Schwelle th. Die Schwelle th kann zu Beginn des Verfahrens von außen vorgegeben werden.

Liegt der Absolutbetrag BC unter der Schwelle th, wird ein Nullzähler NZ um den Wert 1 erhöht. Außerdem wird die Schwelle th um einen wählbaren Wert x erhöht. Um die Schwelle th nicht zu groß werden zu lassen, kann es vorteilhaft sein, in einem weiteren Vergleich die Schwelle th nach der Erhöhung um den wählbaren Wert x mit einem maximalen Schwellenwert $th_{max}$ zu vergleichen und die Schwelle th, wenn nötig, auf den maximalen Schwellenwert $th_{max}$ zu beschränken.

Ist der Absolutbetrag BC des Codierungstransformationskoeffizienten nicht kleiner als die Schwelle th, wird der Absolutbetrag BC des Codierungstransformationskoeffizienten unter Berücksichtigung des zugehörigen Vorzeichens VZ in der Quantisierungseinheit Q quantisiert.

Bei der Quantisierung Q kann eine Beschränkung auf einen maximalen Quantisierungswert vorgesehen sein.

Außerdem wird, falls der Absolutbetrag BC des Codierungstransformationskoeffizienten nicht kleiner ist als die Schwelle th, der aktuelle Zählerstand des Nullzählers NZ in einem Zählerregister gespeichert und der Nullzähler NZ auf einen wählbaren Zählerwert zurückgesetzt.

Der wählbare Zählerwert, auf dem der Nullzähler NZ zurückgesetzt wird, kann, muß aber nicht den Wert Null aufweisen.

Der Wert des Zählerregisters repräsentiert den jeweiligen Run Wert Ri bei Verwendung eines Verfahrens, das Run-Werte und Level-Werte verwendet. In diesem Fall repräsentiert der quantisierte Wert des Absolutbetrages BC des Codierungstransformationskoeffizienten, der unter Hinzufügung des Vorzeichens VZ gespeichert wird, den Level Wert Li.

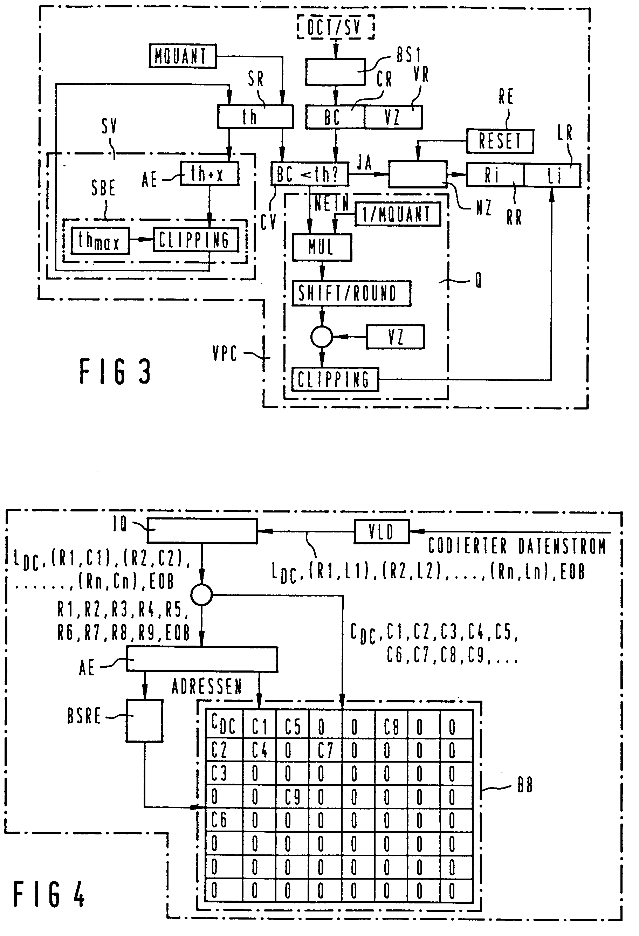

In Figur 4 ist das Verfahren, das zur Rekonstruktion des codierten Videodatenstroms vorgesehen ist, detaillierter dargestellt. Dieses Verfahren wird innerhalb des Rekonstruktionspfades RP durchgeführt.

Das in Figur 4 beschriebene bevorzugte Ausführungsbeispiel zeigt die Anwendung des Verfahrens bei Verwendung von blockbasierten Verfahren, schränkt jedoch die Allgemeingültigkeit des erfindungsgemäßen Verfahrens nicht ein. Für jeden Fachmann ist es leicht möglich, die Vorteile des hier detailliert beschriebenen Ausführungsbeispiels auf das jeweils verwendete Verfahren zur Codierung von Videodatenströmen zu übertragen.

In diesem Teilverfahren wird vorausgesetzt, daß sowohl die den Gleichanteil repräsentierende Komponente $L_{DC}$ als auch die Run-Level-Wertepaare (Ri, Li) verfügbar sind.

Die Level-Werte Li werden einer inversen Quantisierung IQ unterzogen, und die dequantisierten Codierungstransformationskoeffizienten Ci werden mit den zugehörigen Run-Werten Ri zwischengespeichert.

Bei der Verwendung von blockbasierten Verfahren müssen die seriellen Daten nun in Blockdaten überführt werden.

Diese Blockdaten werden im weiteren in einem BildelementBlock BB gespeichert in der Form, daß jeder Codierungstransformationskoeffizient Ci an der Stelle des Bildelement-Blocks BB gespeichert wird, dessen Wert er innerhalb des Bildblockes repräsentiert. Die hierzu nötige Adresse innerhalb des Bildelementblockes BB an die der Codierungstransformationskoeffizient geschrieben wird, wird in einer Adreßberechnungseinheit AE unter Berücksichtigung des jeweiligen Run-Werts Ri und des inversen Scanverfahrens ISV berechnet.

Zu Beginn, also bevor der erste Codierungstransformationskoeffizient abgespeichert wird, ist es vorteilhaft, den gesamten Bildelementblock BB auf den Wert Null zu setzen. Damit ist jedes Bildelement des Bildelementsblocks BB zu Beginn Null, womit im weiteren keine Nullen in den Bildelementblock BB geschrieben werden müssen. Diese Datenbewegung wird bei dem hier beschriebenen Verfahren eingespart.

Sowohl bei der inversen Quantisierung IQ als auch beim Speichern und Auslesen von Bildelementen wird damit gegenüber den herkömmlichen Algorithmen Rechenleistung und auch Verlustleistung (auch durch veringerte Datenbewegung) eingespart, ohne Einbußen in der Qualität der Verarbeitung hinnehmen zu müssen. Dieses im folgenden beschriebene Verfahren wird für jeden Block des blockbasierten Vidoedatenstroms neu durchgeführt, das heißt zu Beginn jeden Blocks wird der Bildelement-Block BB auf Null zurückgesetzt.

Eine Anordnung zur Durchführung des erfindungsgemäßen Verfahrens ist ebenso in Figur 1 beschrieben. In dieser Anordnung ist eine Codierungstransformationseinheit DCT vorgesehen zur Durchführung einer Codierungstransformation DCT auf den zu codierenden Videodatenstrom. Als Ausgangsgröße liefert die Codierungstransformationseinheit DCT die zu dem Videodatenstrom gehörenden Codierungstransformationskoeffizienten. Bei Verwendung eines blockbasierten Verfahrens werden jeweils für alle Bildelemente eines Bildelement-Blocks BB des Videodatenstroms die Codierungstransformationskoeffizienten für den jeweiligen Bildelement-Block BB gebildet.

Zur Speicherung der von der Codierungstransformationseinheit DCT gebildeten Codierungstransformationskoeffizienten ist ein erster Bildblockspeicher BS1 vorgesehen.

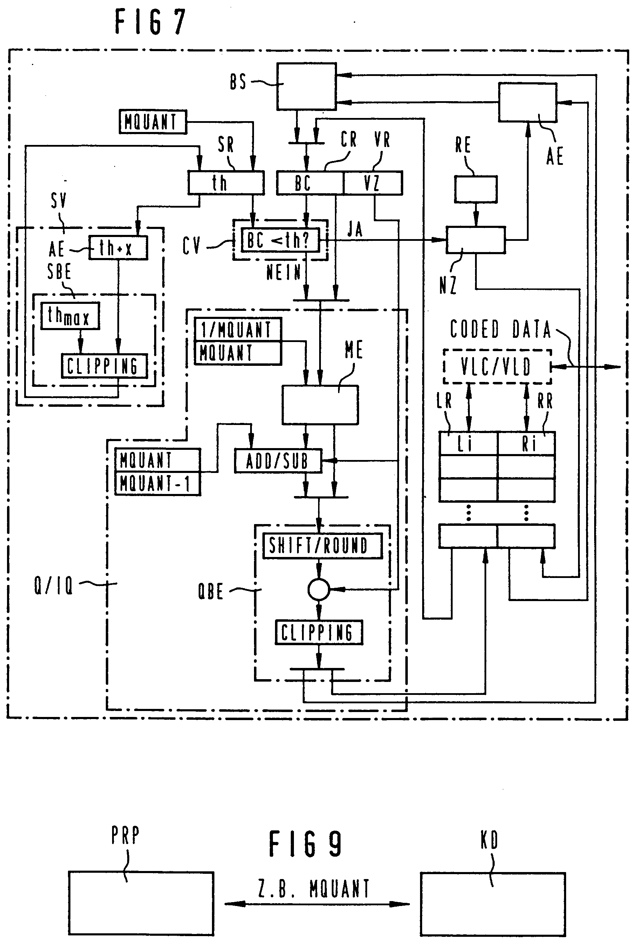

Weiterhin ist ein erstes Mittel VPC vorgesehen zum Scannen, Quantisieren und Run Length Codieren der Codierungstransformationskoeffzienten. Das erste Mittel VPC ist mit dem Bildblockspeicher BS gekoppelt (vgl. Figur 7). Das erste Mittel VPC berechnet Run Length codierte, quantisierte Codierungstransformationskoeffizienten, die an einem Ausgang des ersten Mittels VPC zur Weiterverarbeitung zur Verfügung gestellt sind.

Mit dem Ausgang des ersten Mittels VPC ist ein zweites Mittel RPC gekoppelt zum Run Length Decodieren, zum inversen Quantisieren und zum inversen Scannen der Run Length codierten, quantisierten, gescannten Codierungstransformationskoeffizienten, die von dem ersten Mittel VPC zur Verfügung gestellt sind. Das zweite Mittel RPC ist mit dem Ausgang des ersten Mittels VPC gekoppelt.

Mit einem Ausgang des zweiten Mittels RPC ist eine inverse Codierungstransformationseinheit IDCT gekoppelt, die vorgesehen ist zur Bildung von rekonstruierten Codierungstransformationskoeffizienten. Somit wird in der inversen Codierungstransformationseinheit IDCT eine zu dem in der Codierungstransformationseinheit DCT durchgeführten Codierungstransformation inverse Codierungstransformation durchgeführt.

Zur Speicherung der rekonstruierten Codierungstransformationskoeffizienten ist ein zweiter Bildblockspeicher BS2 vorgesehen, der so dimensioniert ist, daß zum Beispiel bei blockbasierten Verfahren jeweils mindestens die rekonstruierten Codierungstransformationskoeffizienten eines Blockes gespeichert werden können. Der zweite Bildblockspeicher BS2 ist mit der inversen Codierungstransformationseinheit IDCT gekoppelt.

Ein Bildspeicher BIS ist vorgesehen zur Speicherung des rekonstruierten Bildes. Das rekonstruierte Bild ergibt sich aus den Daten, die von der inversen Codierungstransformationseinheit IDCT zur Verfügung gestellt werden.

Mit der inversen Codierungstransformationseinheit IDCT ist ein drittes Mittel PP zur Prädiktion des folgenden Bildes vorgesehen. Der Aufbau des dritten Mittels PP kann je nach verwendeten Verfahren zur Codierung des Videodatenstroms unterschiedlichen Aufbau aufweisen. So kann zum Beispiel ein Loop-Filter LF und/oder ein viertes Mittel BM zur Bewegungskompensation BM vorgesehen sein (vgl. Figur 1).

Weitere Komponenten, die das dritte Mittel PP aufweist, sind von dem jeweils verwendeten Verfahren zur Codierung des Videodatenstroms abhängig. Jedem Fachmann sind eventuelle Erweiterungen des dritten Mittels PP zur Prädiktion des folgenden Bildes, abhängig von dem verwendeten Verfahren, bekannt.

Mit einem Ausgang des dritten Mittels PP ist eine Subtraktionseinheit gekoppelt, in der ein den Minuenden repräsentierender erster Eingang zur Aufnahme des Videodatenstroms vorgesehen ist. Ein mit dem dritten Mittel PP gekoppelter zweiter Eingang der Subtraktionseinheit repräsentiert den Subtrahenden der von der Subtraktionseinheit zu bildenden Differenz. Ein Ausgang der Subtraktionseinheit ist mit einem Eingang der Codierungstransformationseinheit DCT gekoppelt, wodurch es möglich ist, nur noch die Differenzbilder zu codieren und somit sowohl Rechenzeit als auch benötigte Übertragungskapazität einzusparen.

Mit dem Ausgang des ersten Mittels VPC ist ein viertes Mittel EP zur Kanalcodierung des Videodatenstroms gekoppelt. Das vierte Mittel EP weist, wiederum abhängig von dem verwendeten Verfahren unterschiedliche Komponenten auf. So kann zum Beispiel eine Einheit zur Variable Length Codierung VLC vorgesehen sein oder auch eine Einheit zur Fehlererkennung und Fehlerkorrektur ECC/ECD der zu übertragenden Daten sowie eine Einheit zur Variable Length Decodierung VLD. Erweiterungen des vierten Mittels EP sind wie im vorigen beschrieben abhängig von den verwendeten Verfahren.

In Figur 3 ist ein bevorzugtes Ausführungsbeispiel zur Realisierung des ersten Mittels VPC zum Scannen, Quantisieren und Run Length Codieren der Codierungstransformationskoeffizienten dargestellt.

Eine Scaneinheit SV zur Durchführung des Scanverfahrens SV auf die von der Codierungstransformationseinheit DCT berechneten Codierungstransformationskoeffizienten ist mit dem ersten Bildspeicher BS1, in dem die Codierungstransformationskoeffizienten gespeichert sind, gekoppelt.

Zur Speicherung jeweils eines gescanten Codierungstransformationskoeffizienten ist jeweils ein Codierungstransformationskoeffizientenregister CR zur Speicherung des Absolutbetrages BC des jeweils gescanten Codierungstransformationskoeffizienten vorgesehen. Ein erster Eingang des Codierungstransformationskoeffizientenregisters CR ist gekoppelt mit dem ersten Bildblockspeicher BS1.

Weiterhin ist jeweils ein Vorzeichenregister VR für jeden gescanten Codierungstransformationskoeffizienten vorgesehen zur Speicherung des Vorzeichens des jeweils zu bearbeitenden Codierungstransformationskoeffizienten. Ein erster Eingang des jeweiligen Vorzeichenregisters VR ist gekoppelt mit dem ersten Bildblockspeicher BS1.

Ein Eingang einer Codierungstransformationskoeffizientenvergleichseinheit CV ist gekoppelt mit jeweils einem Ausgang des jeweiligen Codierungstransformationskoeffizientenregisters CR, in dem der Absolutbetrag BC des jeweils zu bearbeitenden Codierungstransformationskoeffizienten gespeichert ist.

Der Absolutbetrag BC des jeweils zu bearbeitenden Codierungstransformationskoeffzienten wird in der Codierungstransformationskoeffizientenvergleichseinheit CV verglichen mit der Schwelle th. Die Schwelle th ist gespeichert in einem mit der Codierungstransformationskoeffizientenvergleichseinheit CV gekoppelten Schwellenregister SR. Das Schwellenregister SR ist gekoppelt mit einer Schwellenverarbeitungseinheit SV, in der die Schwelle bearbeitet wird, falls eine Variierung der Schwelle vorgesehen ist.

Ist eine adaptive Veränderung der Schwelle th in dem Verfahren nicht vorgesehen, ist keine Schwellenverarbeitungseinheit SV nötig. In diesem Fall ist die Schwelle th von außen vorzugeben. Wenn eine adaptive Veränderung der Schwelle th vorgesehen ist, wird in dem Schwellenregister nur ein Anfangswert der Schwelle th von außen vorgegeben.

Die Schwellenverarbeitungseinheit SV weist vorzugsweise eine Addiereinheit AE auf, die mit einem Ausgang des Schwellenregisters SR gekoppelt ist. In der Addiereinheit AE wird die Schwelle th um den wählbaren Wert x erhöht, falls der Codierungstransformationskoeffizient größer ist als die Schwelle th. Dieses Kriterium wird von der Codierungstransformationskoeffizientenvergleichseinheit CV geliefert.

Wenn eine Begrenzung der Schwelle th vorgesehen ist, weist die Schwellenverarbeitungseinheit SV eine Schwellenbegrenzungseinheit SBE auf, die die Schwelle th auf den maximalen Schwellenwert $th_{max}$ begrenzt. Der maximale Schwellenwert $th_{max}$ kann von außen vorgegeben werden.

Der Nullzähler NZ, der mit der Codierungstransformationskoeffzientenvergleichseinheit CV gekoppelt ist, ist zur Durchführung der Registrierung der Anzahl logisch aufeinanderfolgender Nullcodierungstransformationskoeffizienten vorgesehen. Falls der Absolutbetrag BC des Codierungstransformationskoeffizienten kleiner ist als die Schwelle th wird der Wert des Nullzählers NZ um den Wert 1 erhöht.

Der Nullzähler NZ ist mit einem Ausgang der Codierungstransformationskoeffizientenvergleichseinheit CV gekoppelt.

Zum Rücksetzen des Nullzählers NZ auf einen wählbaren Zählerwert ist eine Rücksetzeinheit RE vorgesehen. Zur Speicherung des Wertes der Zählereinheit direkt vor dem Zurücksetzen des Nullzählers NZ ist mindestens ein Run Speicherregister RR vorgesehen, das mit der Zählereinheit gekoppelt ist. Eine Quantisierungseinheit Q ist gekoppelt mit der Codierungstransformationskoeffizientenvergleichseinheit CV. Mindestens ein Level Register LR ist gekoppelt mit einem Ausgang der Quantisierungseinheit Q.

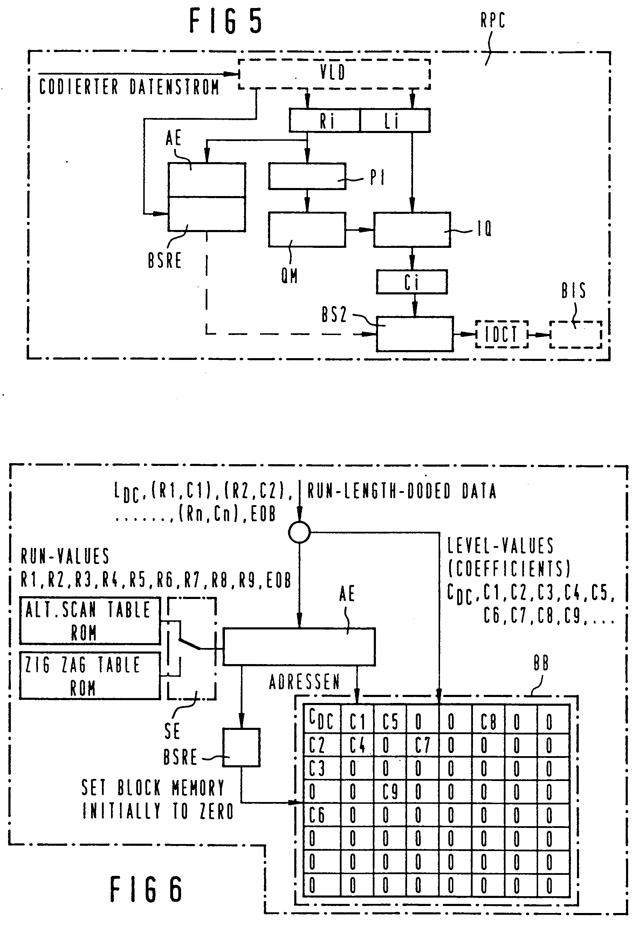

In Figur 5 ist ein detaillierter Aufbau des zweiten Mittels RPC beschrieben. Die Anordnung kann sowohl zur internen Rekonstruktion des codierten Datenstroms als auch zur Decodierung eines von einer Sendeeinheit empfangenen codierten Datenstroms verwendet werden. Dies ist ein Vorteil vor allem bei der Massenproduktion, da hierdurch der Baustein in der Codier/Decodiereinheit CD nur einmal benötigt wird. Dies war bei bisherigen Anordnungen, wie im vorigen erläutert, nicht der Fall.

Das Run Speicherregister RR des jeweils aktuell zu bearbeitenden Run-Werts Ri ist gekoppelt mit einer Zeigerinkrementierungseinheit PI. Das Run Speicherregister RR ist ebenso gekoppelt mit der Adreßberechnungseinheit AE.

In der Adreßberechnungseinheit AE wird, abhängig von dem verwendeten Scanverfahren SV, die Adresse berechnet, an die der jeweils rekonstruierte Codierungstransformationskoeffizient in den zweiten Bildblockspeicher BS2 geschrieben wird. Die Adreßberechnungseinheit AE weist zudem eine Bildblockspeicherrücksetzeinheit BSRE auf, mit der alle Speicherelemente des zweiten Bildblockspeichers BS2 zu Beginn der Rekonstruktion eines jedes Bildelement-Blocks BB auf den Wert Null bzw. auf einen wählbaren Wert zurückgesetzt werden.

Weiterhin ist ein Speicher zur Speicherung einer Quantisierungsmatrix QM im jeweiligen Format des verwendeten Scanverfahrens SV vorgesehen.

Über die Zeigerinkrementierungseinheit PI wird erreicht, daß mittels der Run-Werte aus der Run Length Codierung nur die benötigten Quantisierungswerte ausgelesen werden und zur Dequantisierung, also der inversen Quantisierung IQ der Level-Werte Li verwendet werden. Auch hier werden neben einer Reihe von sonst nutzlos durchgeführten Multiplikationen die ansonsten durchzuführende Wandlung vom seriellen Format in das Blockformat bei Verwendung von blockbasierten Paaren und damit zwei Lese-Schreib-Operationen eingespart im Vergleich zu bekannten Verfahren bei Verwendung von zum Beispiel MPEG-Verfahren oder JPEG-Verfahren.

Fin weiterer Vorteil ist, daß bei einer im Decoder gespeicherten Default-Quantisierungsmatrix und die alternativ von der Codier-Decodiereinheit CD gesendete Matrix das gleiche serielle Format aufweisen.

Bei Verwendung des MPEG2-Verfahrens kann neben dem Zig Zag Scan-Verfahren auch das sogenannte Alternate Scan-Verfahren verwendet werden, wobei jedoch die Quantisierungsmatrix QM von der Codier/Decodiereinheit CD weiter in dem Format des Zig Zag-Verfahrens gesendet wird.

Um in dem Decoder, die in der Empfängereinheit in dem Alternate-Scan-Format vorliegenden Level-Werte Li mit dem richtigen zugehörigen Quantisierern zu multiplizieren, muß hier eine zusätzliche Umsetzung der Quantisierungsmatrix QM aus dem Zig Zag Scan-Format in das Alternate Scan-Format erfolgen, während die Default-Quantisierungsmatrizen in beiden Formen im Decoder abgespeichert werden können. Der Speicher zur Speicherung der Quantisierungsmatrix QM ist gekoppelt mit einer inversen Quantisierungseinheit IQ, die außerdem gekoppelt ist mit dem jeweils zu bearbeitenden Level Speicherregister LR. Anhand der Quantisierungsmatrix QM und des vorliegenden Level-Werts Li wird in der inversen Quantisierungseinheit IQ eine inverse Quantisierung IQ durchgeführt.

Das Ergebnis ist jeweils ein rekonstruierter Codierungstransformationskoeffizient, der in dem zweiten Blockspeicher BS2 an der von der Adreßberechnungseinheit AE berechneten Position innerhalb des zweiten Bildblockspeichers BS2 abgespeichert wird.

In Figur 6 ist ein Ausführungsbeispiel dargestellt, das ein mögliches Umschalten zwischen zwei Scan-Verfahren, dem Zig Zag Scan und dem Alternate Scan beschreibt. Das jeweils verwendete Scan-Verfahren SV wird durch eine Schaltereinheit SE ausgewählt und muß bei der Adreßberechnung in der Adreßberechnungseinheit AE berücksichtigt werden.

Das erste Mittel VPC und das zweite Mittel RPC können in der Codier/Decodiereinheit CD zu einem konfigurierbaren Datenpfad kombiniert werden, wodurch, wie im weiteren beschrieben, das Verfahren zur Codierung und Decodierung erheblich vereinfacht wird.

Zur Einsparung von Speicherkapazität ist ein Blockspeicher BS vorgesehen, der sowohl die Funktion des ersten Bildblockspeichers BS1 als auch die Funktion des zweiten Bildblockspeichers BS2 übernimmt. Dies bedeutet, daß sowohl die Codierungstransformationskoeffzienten, die von der Codierungstransformationseinheit DCT zur Verfügung gestellt werden, als auch die rekonstruierten Codierungstransformationskoeffizienten, die von der inversen Codierungstransformationseinheit IDCT zur Verfügung gestellt werden, in dem Blockspeicher BS nacheinander gespeichert werden können.

Ein erster Eingang des Codierungstransformationskoeffizientenregisters CR, das zur Speicherung des Absolutbetrags BC des jeweils zu bearbeitenden Codierungstransformationskoeffizienten vorgesehen ist, ist gekoppelt mit dem Blockspeicher BS.

Das Vorzeichenregister VR, das zur Speicherung des Vorzeichens VZ des jeweils zu bearbeitenden Codierungstransformationskoeffzienten vorgesehen ist, ist über einen ersten Eingang des Vorzeichenregisters VR gekoppelt mit dem Blockspeicher BS.

Mit dem Codierungstransformationskoeffizientenregister CR ist die Codierungstransformationskoeffizientenvergleichseinheit CV gekoppelt. Der Aufbau des Schwellenregisters SR und der mit dem Schwellenregister SR gekoppelten Schwellenverarbeitungseinheit SV ist entsprechend dem Aufbau, der im vorigen beschrieben wurde.

Auch der Aufbau des Nullzählers NZ sowie der Rücksetzeinheit RE des Nullzählers NZ ist entsprechend des im vorigen beschriebenen Aufbau des ersten Mittels VPC. Weiterhin ist der Nullzähler NZ mit einem weiteren Ausgang mit der Adreßberechnungseinheit AE gekoppelt.

Die Quantisierungseinheit Q weist die in Figur 7 beschriebenen Komponenten auf. Eine Multiplizierereinheit ME, in der der Codierungstransformationskoeffizient vorzugsweise mit einem Kehrwert 1/$M_{Quant}$ einer Quantisierungsstufe $M_{Quant}$ bzw. mit dem Wert $M_{Quant}$ multipliziert wird, je nachdem, ob die Quantisierungseinheit die Funktion der Quantisierung Q oder der inversen Quantisierung IG durchführt.

Zusätzlich kann die Quantisierungseinheit Q eine Quantisierungsbegrenzungseinheit QBE aufweisen, in der der quantisierte Codierungstransformationskoeffizient auf einen maximalen Quantisierungswert begrenzt wird.

Auch kann die Quantisierungseinheit Q eine zusätzliche Einheit zur Durchführung des Variable Thresholding VT aufweisen.

Eine weitere Komponente der Quantisierungseinheit Q ist eine Einheit zum Schieben und Runden der quantisierten bzw. dequantisierten Codierungstransformationskoeffizienten.

Je nachdem, welches Register an die Multipliziereinheit ME angelegt wird, der Kehrwert 1/$M_{Quant}$ der Quantisierungsstufe $M_{Quant}$ oder die Quantisierungsstufe $M_{Quant}$ selbst, arbeitet die Quantisierungseinheit Q als Quantisierer oder als Dequantisierer, also als die inverse Quantisierungseinheit IQ.

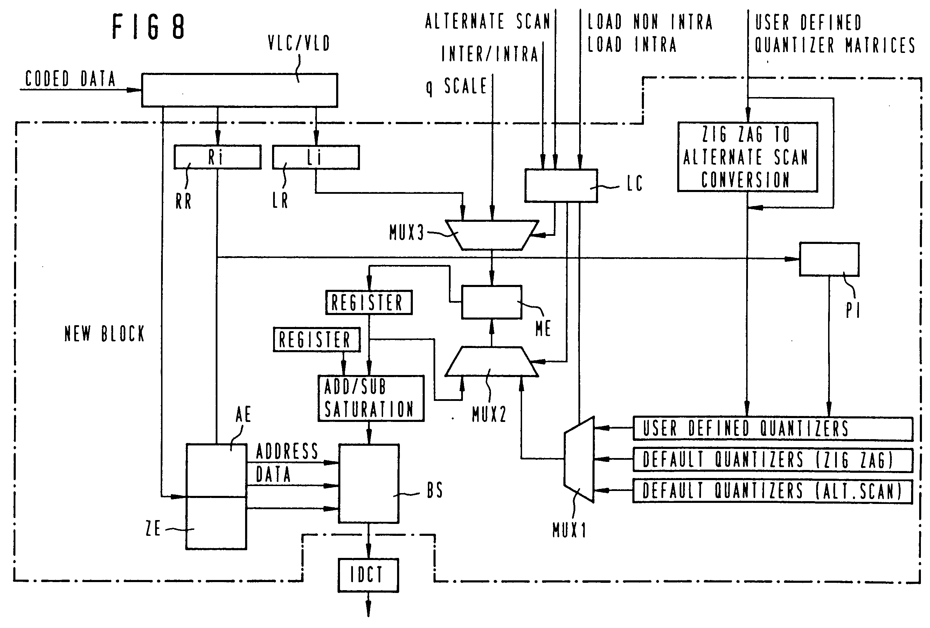

In Figur 8 ist eine Anordnung beschrieben, in der die Auswahl unterschiedlicher Scan-Verfahren und der Auswahl der Quantisierungsmatrizen in dem jeweiligen Format des Scan-Verfahrens durch einen ersten Multiplexer MUX1 beschrieben ist. Durch eine Controller-Einheit LC wird der erste Multiplexer MUX1, ein zweiter Multiplexer MUX2 und ein dritter Multiplexer MUX3 gesteuert. Der Aufbau und die Arbeitsweise der in Figur 8 beschriebenen Anordnung ist im wesentlichen im vorigen beschrieben worden und aus Figur 8 ersichtlich.

Die Quantisierungsschrittweite wird von der Codier/Decodiereinheit CD abhängig vom Füllstand eines Übertragungspufferspeichers und optional adaptiv in Abhängigkeit vom zu codierenden Bildinhalt des Videodatenstroms eingestellt. Damit wird in direkter Weise Einfluß auf die Bildqualität und die zur Übertragung dieser Bilder des Videodatenstroms erforderliche Datenrate genommen.

Quantisierungsschrittweite und die vorzugebende obere Grenze für die variable Schwelle th bei Verwendung eines Variable Thresholdings VT sind wichtige Steuerparameter die sich höchstens auf Makroblockebene ändern. Diese Parameter können von einem programmierbaren Prozessor PRP, mit dem Vorteil der freien Algorithmenwahl, berechnet und an den konfigurierbaren Datenpfad KD übergeben werden, in dem nun mit diesen Parametern die Bildelemente des zu codierenden Videodatenstromes verarbeitet werden. Somit können also z. B. die Algorithmen zur Berechnung der Quantisierungsstufe $M_{Quant}$ frei gewählt werden, oder auch eine maximale Schwelle VTmax bestimmt werden und an eine Anordnung, wie sie z. B. in den Figuren 7 oder 8 dargestellt sind, übergeben werden.

Mit Hilfe des programmierbaren Prozessors PRP kann die Hardware und damit die Durchführung des erfindungsgemäßen Verfahrens zusätzlich beschleunigt werden.

Unter dem konfigurierbaren Datenpfad KD ist in diesem Zusammenhang eine Schaltungsstruktur zu verstehen, bei der Schaltelemente des ersten Mittels VPC und Schaltelemente des zweite Mittels RPC in einer Schaltungsstruktur zur gemeinsamen Verwendung vorgesehen sind, d. h. Schaltelemente des ersten Mittels VPC und Schaltelemente des zweite Mittels RPC werden miteinander kombiniert.

Auf diese Weise hat man die Vorteile einer programmierbaren Lösung und kann mit vertretbarem Aufwand eine kostengünstige aber trotzdem leistungsfähige Codier/Decodiereinheit CD bauen, in dem die hohe erforderliche Rechenleistung auf Pixelebene (Bildpunktebene) von einer schnellen dedizierten Hardware erbracht wird. Die programmierbarkeit wird dabei nur dort eingesetzt, wo sie wirklich benötigt wird (vgl. Figur 9).

**Patentansprüche**

1. Verfahren zur Codierung von einem Videodatenstrom für alle Bildelemente des Videodatenstroms,

   - bei dem in einem Vorwärtspfad (VP) Codierungstransformationskoeffizienten gebildet werden durch Anwendung einer Codierungstransformation (DCT),
   - bei dem in dem Vorwärtspfad (VP) einer Codier/Decodiereinheit (CD) auf die Codierungstransformationskoeffizienten ein Scan-Verfahren (SV) angewendet wird,
   - bei dem in dem Vorwärtspfad (VP) der Codier/Decodiereinheit (CD) die gescanten Codierungstransformationskoeffizienten in einer Quantisierungseinheit (Q) quantisiert werden,
   - bei dem in dem Vorwärtspfad (VP) der Codier/Decodiereinheit (CD) eine Run Length Codierung (RLC) durchgeführt wird,
   - bei dem bei einer internen Rekonstruktion des Videodatenstroms in einem Rekonstruktionspfad (RP) zu Beginn der Rekonstruktion eine Run Length Decodierung (RLD) durchgeführt wird,
   - bei dem aus der Run Length Decodierung (RLD) erhaltene Daten einer inversen Quantisierung (IQ) unterzogen werden, und
   - bei dem die invers quantisierten Daten einem zu dem Scan-Verfahren (SV) inversen Scan-Verfahren (ISV) unterzogen werden,
   - bei dem die aus dem inversen Scan-Verfahren (ISV) erhaltenen Daten einer zu einer verwendeten Codierungstransformation inversen Codierungstransformation (IDCT) unterzogen werden, und
   - bei dem ein rekonstruierter Videodatenstrom von dem Videodatenstrom subtrahiert wird, so daß jeweils nur die Differenz des Videodatenstroms und des rekonstruierten Videodatenstroms verarbeitet wird.

2. Verfahren nach Anspruch 1, bei dem bei der Quantisierung eine variable Quantisierungsschwelle (VT) verwendet wird.

3. Verfahren nach Anspruch 1 oder 2, bei dem die vorgesehenen Verfahrensschritte miteinander kombiniert werden.

4. Verfahren nach einem der Ansprüche 1 bis 3,

- bei dem ein Absolutbetrag (C) jedes Codierungstransformationskoeffizienten mit einer Schwelle (th) verglichen wird,
- bei dem für den Fall, daß der Absolutbetrag (C) des Codierungstransformationskoeffizienten kleiner ist als die Schwelle (th), die Schwelle um einen wählbaren Wert (x) erhöht wird und ein Nullzähler um den Wert 1 erhöht wird, und
- bei dem für den Fall, daß der Absolutbetrag (C) des Codierungstransformationskoeffizienten größer ist als die Schwelle (th),

    -- der Codierungstransformationskoeffizient quantisiert wird,
    -- der quantisierte Codierungstransformationskoeffizient in einem Quantisierungsregister gespeichert wird,
    -- der Wert des Nullzählers zu diesem Zeitpunkt in einem Zählerregister gespeichert wird,
    -- der Nullzähler auf einen wählbaren Zählerwert zurückgesetzt wird.

5. Verfahren nach einem der Ansprüch 1 bis 4, bei dem nach Erhöhung der Schwelle um den wählbaren Wert (x) die Schwelle auf einen maximalen Schwellenwert (th$_{max}$) beschränkt wird.

6. Verfahren nach Anspruch 4 oder 5, bei dem der Wert des Zählerregisters einen Run-Wert darstellt und der quantisierte Codierungstransformationskoeffizient mit Berücksichtigung des Vorzeichens des Codierungstransformationskoeffizienten einen Level-Wert darstellt.

7. Verfahren nach einem der Ansprüche 4 bis 6,

- bei dem in dem Rekonstruktionspfad (RP) zu Beginn der Rekonstruktion eines Bildelement-Blocks (BB) alle Elemente des Bildelement-Blocks (BB) auf den Wert Null gesetzt werden,
- bei dem der Wert des Zählerregisters in einen Arbeitsspeicher eingelesen wird,
- bei dem der Wert des Quantisierungsregisters in einen Arbeitsspeicher eingelesen wird,

- bei dem der Wert des Quantisierungsregisters invers quantisert wird und einen rekonstruierten Codierungstransformationskoeffizienten ergibt,
- bei dem anhand des Werts des Zahlerregisters und des verwendeten Scan-Verfahrens (SV) die Adresse des Bildelements innerhalb des Bildelement-Blocks (BB) berechnet wird,
- bei dem der rekonstruierte Codierungstransformationskoeffizient an die Adresse des Bildelements innerhalb des Bildelement-Blocks (BB) geschrieben wird.

8. Verfahren nach einem der Ansprüche 1 bis 7, bei dem eine Berechnung von konfigurierbaren Parametern von verwendeten Codier-Algorithmen und/oder Decodier-Algorithmen durch einen programmierbaren Prozessor erfolgt und in den Codier-Algorithmen und/oder Decodier-Algorithmen verwendet werden.

9. Verfahren nach Anspruch 7 oder 8, bei dem die Verfahrensschritte zur Rekonstruktion des Videodatenstroms auch in einer Decodiereinheit einer Empfängereinheit, die den Videodatenstrom empfängt, durchgeführt werden.

10. Anordnung zur Durchführung des Verfahrens nach Anspruch 1,

- bei der eine Codierungstransformations-Einheit (DCT) vorgesehen ist zur Bildung von Codierungstransformationskoeffizienten für alle Bildelemente eines Bildelement-Blocks (BB) eines Videodatenstroms,
- bei der ein erster Bildblockspeicher (BS1) vorgesehen ist, in dem die Codierungstransformationskoeffizienten des Bildelement-Blocks (BB) gespeichert werden,
- bei der ein mit dem ersten Bildblockspeicher (BS1) gekoppeltes erstes Mittel (VPC) zum Scannen, Quantisieren und Run-Length-Codieren der Codierungstransformationskoeffizienten des Bildelement-Blocks (BB) vorgesehen ist,
- bei der ein mit einem Ausgang des ersten Mittels (VPC) gekoppeltes zweites Mittel (RPC) zum Run-Length-Decodieren, zum inversen Quantisieren und zum inversen Scannen vorgesehen ist,
- bei der eine mit einem Ausgang des zweiten Mittels (RPC) gekoppelte Inverse-Codierungstransformations-Einheit (IDCT) vorgesehen ist zur Bildung von rekonstruierten Codierungstransformationskoeffizienten,
- bei der die Inverse-Codierungstransformations-Einheit (IDCT) mit Dateneingängen eines zweiten Blockspeichers (BS2) verbunden ist,
- bei der ein Bildspeicher (BIS) vorgesehen ist zur Speicherung des rekonstruierten Bildes,

- bei der ein drittes Mittel (PP) zur Prädiktion des folgenden Bildes des Videodatenstroms vorgesehen ist,

- bei der eine Subtraktions-Einheit vorgesehen ist, wobei die Subtraktions-Einheit

einen ersten Eingang, der den Minuenden repräsentiert, zur Aufnahme des Videodatenstroms,

einen mit einem Ausgang der inversen-Codierungstransformations-Einheit (IDCT) gekoppelten zweiter Eingang, der den Subtrahend repräsentiert, und

einen mit einem Eingang der Codierungstransformations-Einheit (DCT) gekoppelten Ausgang aufweist, und

- bei der eine mit dem Ausgang des ersten Mittels verbundene Variable-Length-Codierungs-Einheit (VLC) vorgesehen ist zur Durchführung einer Variable-Length-Codierung (VLC).

11. Anordnung nach Anspruch 10, bei der das erste Mittel (VPC) und das zweite Mittel (RPC) in einer Schaltungsstruktur, in denen Schaltelemente zur gemeinsamen Verwendung vorgesehen sind, zu einem konfigurierbaren Datenpfad (KD) miteinander kombiniert sind, wobei

- ein erster Eingang eines Codierungstransformationskoeffizienten-Registers, das zur Speicherung eines Absolutbetrags (BC) des jeweils zu bearbeitenden Codierungstransformationskoeffizienten vorgesehen ist, ist gekoppelt mit dem Blockspeicher (BS),

- ein erster Eingang eines Vorzeichen-Registers (VR), das zur Speicherung eines Vorzeichen des jeweils zu bearbeitenden Codierungstransformationskoeffizienten vorgesehen ist, ist gekoppelt mit dem Blockspeicher (BS),

- eine Codierungstransformationskoeffizientenvergleichseinheit (CV) ist vorgesehen, wobei ein Eingang der Codierungstransformationskoeffizientenvergleichseinheit (CV) mit einem Ausgang des Codierungstransformationskoeffizienten-Registers (CR) gekoppelt ist,

- ein mit der Codierungstransformationskoeffizientenvergleichseinheit (CV) gekoppeltes Schwellenregister (SR) ist vorgesehen zur Speicherung der Schwelle (th),

- eine mit dem Schwellenregister (SR) gekoppelte Schwellenverarbeitungseinheit (SV) ist vorgesehen, in der die Schwelle (th) bearbeitet wird,

- ein Nullzähler (NZ) ist vorgesehen, die mit der Codierungstransformationskoeffizientenvergleichseinheit (CV) gekoppelt ist, zur Durchführung der Registrierung der Anzahl logisch aufeinanderfolgender Null-Codierungstransformationskoeffizienten,

- eine Rücksetzeinheit (RE) ist vorgesehen, mit der der Nullzähler (NZ) auf einen wählbaren Zählerwert zurückgesetzt wird,

- mindestens ein mit dem Nullzähler (NZ) gekoppeltes Run Speicherregister (RR) zur Speicherung des Werts des Nullzählers (NZ) direkt vor dem Zurücksetzen des Nullzählers (NZ) mit der Rücksetzeinheit (RE) ist vorgesehen,

- eine Quantisierungseinheit (Q) ist vorgesehen, wobei ein erster Eingang der Quantisierungseinheit (Q) mit dem Ausgang des Codierungstransformationskoeffizienten-Registers (CR) gekoppelt ist,

ein zweiter Eingang der Quantisierungseinheit (Q) mit einem Ausgang des vorzeichen-Registers (VR) gekoppelt ist,

ein erster Ausgang der Quantisierungseinheit (Q) mit dem Blockspeicher (BS) gekoppelt ist, und

ein zweiter Ausgang der Quantisierungseinheit (Q) mit einem Eingang mindestens eines Level-Speicherregisters (LR) gekoppelt ist,

- ein erster Eingang einer Adreßberechnungs-Einheit (AE), in der für den rekonstruierten Codierungstransformationskoeffizienten berechnet wird, an welche Adresse des Blockspeichers (BS) der rekonstruierte Codierungstransformationskoeffizient geschrieben wird, ist gekoppelt mit einem ersten Ausgang des mindestens einen Run Speicheregister (RR),

- ein zweiter Eingang der Adreßberechnungs-Einheit (AE) ist gekoppelt mit einem Ausgang des Nullzählers (NZ),

- ein Ausgang der Adreßberechnungs-Einheit (AE) ist verbunden mit einem Adreß-Eingang des Blockspeichers (BS) zur Aktivierung der benötigten Speicherbereiche, in die der rekonstruierte Codierungstransformationskoeffizient geschrieben werden soll,

- ein erster Ausgang des mindestens einen Level-Speicherregisters (LR) ist gekoppelt mit einem zweiten Eingang des Codierungstransformationskoeffizienten-Registers (CR) und mit einem zweiten Eingang des Vorzeichen-Registers (VR), und

- ein zweiter Ausgang des mindestens einen Level-Speicherregisters (LR) und ein zweiter Ausgang des mindestens einen Run-Speicheregisters (RR), sind verbunden mit einer Einheit, in der die Variable-Length-Codierung (VLC) und/oder eine Variable-Length-Decodierung (VLD) durchgeführt wird.

12. Anordnung nach Anspruch 11,

- bei der eine Addiereinheit (AE) mit einem Ausgang des Schwellenregisters (SR) gekoppelt ist, wobei in der Addiereinheit (AE) die Schwelle (th) um einen wählbaren Wert (x) erhöht wird, falls der Codierungstransformationskoeffizient größer ist als die Schwelle (th),

- bei der die Schwellenverarbeitungseinheit eine Schwellenbegrenzungseinheit aufweist, die die Schwelle (th) auf einen maximalen Schwellenwert (th$_{max}$) begrenzt.

13. Anordnung nach Anspruch 11 oder 12, bei der die Quantisierungseinheit (Q) eine Multiplizierereinheit (ME) aufweist, in der der Codierungstransformationskoeffizient mit einem Kehrwert

$$\frac{1}{M_{Quant}}$$

einer Quantisierungsstufe M$_{Quant}$ multipliziert wird oder in der der Codierungstransformationskoeffizient mit der Quantisierungsstufe M$_{Quant}$ multipliziert wird.

14. Anordnung nach einem der Ansprüche 11 bis 13, bei der die Quantisierungseinheit (Q) zusätzlich eine Quantisierungsbegrenzungseinheit aufweist, in der der quantisierte Codierungstransformationskoeffizient auf einen maximalen Quantisierungswert begrenzt wird.

15. Anordnung nach einem der Ansprüche 11 bis 14, bei der die Quantisierungseinheit (Q) zusätzlich eine Einheit aufweist, die ein Variable Thresholding (VT) ermöglicht.

16. Anordnung nach einem der Ansprüche 10 bis 15, bei der ein programmierbarer Prozessor vorgesehen ist zur Berechnung von konfigurierbaren Parametern von verwendeten Codier-Algorithmen und/oder Decodier-Algorithmen.

# FIG 1

# FIG 2

FIG 3

FIG 4

## FIG 5

RPC

CODIERTER DATENSTROM → VLD

Ri | Li

AE

P1

BSRE

QM

IQ

Ci

BS2

IDCT

BIS

## FIG 6

$L_{DC}$,(R1,C1),(R2,C2), | RUN-LENGTH-DODED DATA
.......,(Rn,Cn),E0B

RUN-VALUES
R1,R2,R3,R4,R5,R6,R7,R8,R9,E0B

LEVEL-VALUES
(COEFFICIENTS)
$C_{DC}$,C1,C2,C3,C4,C5,
C6,C7,C8,C9,...

ALT.SCAN TABLE
ROM

ZIG ZAG TABLE
ROM

AE

ADRESSEN

SE

BSRE

SET BLOCK MEMORY
INITIALLY TO ZERO

BB

| $C_{DC}$ | C1 | C5 | 0 | 0 | C8 | 0 | 0 |
|---|---|---|---|---|---|---|---|
| C2 | C4 | 0 | C7 | 0 | 0 | 0 | 0 |
| C3 | 0 | 0 | 0 | 0 | 0 | 0 | 0 |
| 0 | 0 | C9 | 0 | 0 | 0 | 0 | 0 |
| C6 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

# FIG 7

# FIG 9

Z.B. MQUANT

PRP

KD

# FIG 8

CODED DATA → VLC/VLD

ALTERNATE SCAN
INTER/INTRA
q SCALE

LOAD NON INTRA
LOAD INTRA

USER DEFINED
QUANTIZER MATRICES

Ri — RR

Li — LR

LC

ZIG ZAG TO
ALTERNATE SCAN
CONVERSION

MUX3

ME

PI

NEW BLOCK

REGISTER

REGISTER

ADD/SUB
SATURATION

MUX2

AE

ADDRESS
DATA

BS

MUX1

USER DEFINED QUANTIZERS

DEFAULT QUANTIZERS (ZIG ZAG)

DEFAULT QUANTIZERS (ALT.SCAN)

ZE

IDCT

EP 0 752 788 A2